# EUROPÄISCHE PATENTANMELDUNG

(11) **EP 3 239 972 A1**
(43) Veröffentlichungstag der Anmeldung: **01.11.2017**
(21) Anmeldenummer: 17165164.9
(22) Anmeldetag: 06.04.2017
(51) Int. Cl.: G10K 9/122, G01H 11/08, G10K 11/00, G10K 11/162

(54) **ULTRASCHALLSENSOR FÜR EIN KRAFTFAHRZEUG, FAHRERASSISTENZSYSTEM, KRAFTFAHRZEUG SOWIE VERFAHREN ZUM HERSTELLEN EINES ULTRASCHALLSENSORS**

(30) Priorität: 28.04.2016 DE 102016107865
(71) Anmelder: Valeo Schalter und Sensoren GmbH, 74321 Bietigheim-Bissingen (DE)
(72) Erfinder: Jung, Thomas, 74321 Bietigheim-Bissingen (DE); Hamm, Wolfgang, 74321 Bietigheim-Bissingen (DE); Weyland, Joerg, 74321 Bietigheim-Bissingen (DE); Dr. Haering, Felix, 74321 Bietigheim-Bissingen (DE)

(57) **Zusammenfassung**

Die Erfindung betrifft einen Ultraschallsensor (4) für ein Kraftfahrzeug (1) mit einer topfförmigen Membran (8) aufweisend einen Membranboden (10) und eine Membranmantelwand (9), wobei der Ultraschallsensor (4) zum Aussenden und/oder Empfangen von Ultraschallsignalen über den Membranboden (9) ausgebildet ist, wobei zumindest der Membranboden (9) der topfförmige Membran (8) zumindest bereichsweise aus einer Magnesiumlegierung (18) ausgebildet ist. Die Erfindung betrifft außerdem ein, Fahrerassistenzsystem (2) mit zumindest einem Ultraschallsensor (4), ein Kraftfahrzeug (1) mit einem Fahrerassistenzsystem (2) sowie ein Verfahren zum Herstellen eines Ultraschallsensors (4).

## Beschreibung

Die Erfindung betrifft einen Ultraschallsensor für ein Kraftfahrzeug mit einer topfförmigen Membran aufweisend einen Membranboden und eine Membranmantelwand, wobei der Ultraschallsensor zum Aussenden und/oder Empfangen von Ultraschallsignalen über den Membranboden ausgebildet ist. Die Erfindung betrifft außerdem ein Fahrerassistenzsystem mit zumindest einem Ultraschallsensor, ein Kraftfahrzeug mit einem Fahrerassistenzsystem sowie ein Verfahren zum Herstellen eines Ultraschallsensors.

Ultraschallsensoren beziehungsweise Ultraschallwandler für Kraftfahrzeuge sind bereits aus dem Stand der Technik bekannt und können beispielsweise dazu eingesetzt werden, Objekte in einem Umgebungsbereich des Kraftfahrzeugs sowie Abstände der Objekte zu dem Kraftfahrzeug zu erfassen. Dazu sendet der Ultraschallsensor in einer Senderichtung ein Ultraschallsignal aus und empfängt das an dem Objekt reflektierte Ultraschallsignal entgegen der Senderichtung wieder. Anhand einer Laufzeit des Ultraschallsignals kann der Abstand des Objektes relativ zum Ultraschallsensor und damit relativ zum Kraftfahrzeug bestimmt werden. Das Vorhandensein des Objektes sowie der erfasste Abstand des Objekts zu dem Kraftfahrzeug können dabei einem Fahrerassistenzsystem des Kraftfahrzeugs, beispielsweise einem Parkassistenzsystem des Kraftfahrzeugs, bereitgestellt werden.

Zur Erzeugung des Ultraschallsignals weisen die Ultraschallsensoren in der Regel Membranen auf, welche zum Schwingen angeregt werden. Bei Ultraschallsensoren gemäß dem Stand der Technik sind diese Membranen in der Regel aus einer Aluminiumlegierung hergestellt. Die Energie zur Schwingungsanregung der Aluminiummembran beziehungsweise die Schwingungsenergie für die Aluminiummembran kann von einem Wandlerelement, beispielsweise einem Piezoelement, bereitgestellt werden, welches mit der Membran verbunden ist. Diese Ultraschallsensoren gemäß dem Stand der Technik weisen jedoch aufgrund der hohen Masse der Membranen eine hohe Ausschwingzeit auf. Da die Membranen während der Ausschwingzeit die reflektierten Ultraschallsignale nicht empfangen können, kann es vorkommen, dass diese Ultraschallsensoren Objekte, welche sich insbesondere in einem Nahbereich relativ zum Kraftfahrzeug befinden, in welchem die Laufzeit des Ultraschallsignals sehr gering ist, nicht zuverlässig erfassen können.

Es ist Aufgabe der vorliegenden Erfindung, eine Lösung bereitzustellen, wie ein Ultraschallsensor für ein Kraftfahrzeug besonders zuverlässig zum Detektieren von Objekten in einem Nahbereich des Kraftfahrzeugs eingesetzt werden kann.

Diese Aufgabe wird erfindungsgemäß durch einen Ultraschallsensor, ein Fahrerassistenzsystem, ein Kraftfahrzeug sowie ein Verfahren gemäß den unabhängigen Patentansprüchen gelöst. Vorteilhafte Ausführungsformen der Erfindung sind Gegenstand der abhängigen Patentansprüche, der Beschreibung sowie der Figuren.

Gemäß einer vorteilhaften Ausgestaltung der Erfindung weist ein Ultraschallsensor für ein Kraftfahrzeug insbesondere eine topfförmige Membran auf. Die Membran weist dabei insbesondere einen Membranboden und eine Membranmantelwand auf, wobei der Ultraschallsensor zum Aussenden und/oder Empfangen von Ultraschallsignalen über den Membranboden ausgebildet ist. Darüber hinaus ist zumindest der Membranboden der topfförmigen Membran insbesondere zumindest bereichsweise aus einer Magnesiumlegierung ausgebildet.

In einer bevorzugten Ausführungsform weist der erfindungsgemäße Ultraschallsensor für ein Kraftfahrzeug eine topfförmige Membran auf, welche einen Membranboden und eine Membranmantelwand umfasst. Der Ultraschallsensor ist zum Aussenden und/oder Empfangen von Ultraschallsignalen über den Membranboden ausgebildet. Darüber hinaus ist zumindest der Membranboden der topfförmigen Membran zumindest bereichsweise aus einer Magnesiumlegierung ausgebildet.

Die topfförmige Membran kann beispielsweise einen runden oder ovalen Membranboden aufweisen, welcher einen kreisförmigen oder ovalförmigen Außenumfang beziehungsweise Außenrand umfasst. Unter ovalförmig beziehungsweise ellipsenförmig ist hier eine von einem Kreis abweichende, eckenfreie Form zu verstehen. Der Membranboden weist dabei insbesondere eine in eine Senderichtung des Ultraschallsensors weisende Vorderseite und eine der Vorderseite gegenüberliegende Rückseite auf. Eine entlang der Senderichtung orientierte Längsachse des Ultraschallsensors ist insbesondere senkrecht zu der Vorderseite beziehungsweise Rückseite des Membranbodens orientiert. Die Membranmantelwand ist dabei insbesondere entlang einer um Längsachse verlaufenden Umlaufrichtung angeordnet. Anders ausgedrückt ist die Membranmantelwand um die Längsachse umlaufend angeordnet. Die Membranmantelwand kann dabei an der Rückseite des Membranbodens und senkrecht zu der Rückseite des Membranbodens orientiert angeordnet sein. Mit anderen Worten erstreckt sich die Membranmantelwand parallel zu der Längsachse ausgehend von dem Membranboden entgegen der Senderichtung des Ultraschallsensors. Insbesondere erstreckt sich eine Außenseite der Membranmantelwand ausgehend von dem Außenrand des Membranbodens senkrecht zu der Rückseite des Membranbodens entlang der Längsachse. Die Außenseite der Membranmantelwand folgt also in der Umlaufrichtung insbesondere einer Form des Außenrandes der Membran. An der Rückseite des Membranbodens ist dabei insbesondere ein Wandlerelement, beispielsweise ein Piezoelement, angeordnet, welches zur Schwingungsanregung des Membranbodens ausgebildet ist.

Dabei ist nun zumindest der Membranboden der topfförmigen Membran zumindest teilweise aus der Magnesiumlegierung ausgebildet. Dies bedeutet insbesondere, dass zumindest 60 Prozent, vorzugsweise zumindest 80 Prozent, des Membranbodens aus der Magnesiumlegierung ausgebildet sind. Insbesondere besteht der Membranboden aus der Magnesiumlegierung. Dies bedeutet, dass der Membranboden, unter Berücksichtigung von Fertigungstoleranzen und Messtoleranzen, vollständig und ausschließlich aus der Magnesiumlegierung ausgebildet ist.

Durch die zumindest bereichsweise Ausbildung des Membranbodens aus der Magnesiumlegierung kann eine Masse des Membranbodens im Vergleich zu einem herkömmlichen, aus einer Aluminiumlegierung ausgebildeten Membranboden verringert werden, sodass der erfindungsgemäße Ultraschallsensor eine besonders kurze Ausschwingzeit aufweist. Aufgrund dieser verringerten Ausschwingzeit kann der Ultraschallsensor somit besonders zuverlässig zum Erfassen von Objekten und deren Abständen im Nahbereich des Kraftfahrzeugs eingesetzt werden, da der Membranboden nach der Anregung nach einer besonders kurzen Zeit wieder zum Empfangen des in dem Umgebungsbereich reflektieren Ultraschallsignals bereit ist.

Vorzugsweise ist zusätzlich die Membranmantelwand zumindest bereichsweise aus der Magnesiumlegierung ausgebildet. Insbesondere ist dabei die gesamte topfförmige Membran aus der Magnesiumlegierung ausgebildet. Somit kann in vorteilhafter Weise die Membran besonders unaufwendig durch Bereitstellen nur eines Materials, nämlich der Magnesiumlegierung, hergestellt werden.

In einer Ausführungsform der Erfindung ist der Membranboden kreisförmig ausgebildet, eine Außenseite der Membranmantelwand kreisförmig um eine senkrecht zu dem Membranboden orientierte Längsachse verlaufend ausgebildet und eine Innenseite der Membranmantelwand zumindest in einem an eine Rückseite des Membranbodens angrenzenden Bereich von einer Kreisform abweichend und eckenfrei, insbesondere ellipsenförmig beziehungsweise ovalförmig, um die Längsachse verlaufend ausgebildet. Der runde Membranboden weist also in Umlaufrichtung einen konstanten Radius auf. Der Membranboden weist somit einen kreisförmigen Außenrand auf, ausgehend von welchem sich die Außenseite der Membranmantelwand entgegen der Senderichtung des Ultraschallsensors parallel zu der Längsachse erstreckt. Die Außenseite folgt somit dem kreisförmigen Außenrand des Membranbodens in der Umlaufrichtung. Die Membranmantelwand weist also entlang der Umlaufrichtung einen konstanten Außenradius auf, welcher insbesondere dem Radius des Membranbodens entspricht. Der Außenradius ist dabei ein Abstand der Längsachse zu der Membranmantelwand in radialer Richtung.

Die Innenseite der Membranmantelwand verläuft in der Umlaufrichtung insbesondere ellipsenförmig beziehungsweise oval. Diese bedeutet, dass ein Innenradius der Membranmantelwand, also ein Abstand der Längsachse zu der Innenseite der Membranmantelwand, in Umlaufrichtung veränderlich beziehungsweise nicht konstant ist. Daraus folgt, dass sich eine Wandstärke der Membranmantelwand, also ein Abstand zwischen der Innenseite und der Außenseite der Membranmantelwand, entlang der Umlaufrichtung verändert. Der Innenradius der Membranmantelwand ist dabei geringer als der Radius des Membranbodens. Die Rückseite des Membranbodens weist also einen ersten Bereich auf, welcher sich von der Längsachse bis zu dem Innenradius, also bis zu der Innenseite der Membranmantelwand, erstreckt, und einen zweiten Bereich auf, welcher sich von dem Innenradius bis zu dem Außenradius, also bis zu der Außenseite der Membranmantelwand, erstreckt. In dem zweiten Bereich auf der Rückseite ist die Membranmantelwand angeordnet, der zweite Bereich ist also von der Membranmantelwand bedeckt beziehungsweise überdeckt. Der erste Bereich der Rückseite des Membranbodens, in welchem insbesondere das Piezoelement angeordnet ist, ist nicht durch die Membranmantelwand bedeckt und aufgrund des Verlaufs der Innenseite der Membranmantelwand in der Umlaufrichtung oval beziehungsweise ellipsenförmig ausgebildet. Aufgrund der ellipsenförmigen Form des ersten Bereiches, welcher durch das Wandlerelement zum Schwingen angeregt wird, weist der Ultraschallsensor daher eine Schallkeule auf, welche entlang der Hauptachse des ellipsenförmigen ersten Bereiches eine größere Breite aufweist als entlang der Nebenachse des ellipsenförmigen ersten Bereiches. Mittels der Form des ersten Bereiches kann also eine Richtcharakteristik des Ultraschallsensors eingestellt werden. In einer bestimmungsgemäßen Einbaulage des Ultraschallsensors am Kraftfahrzeug erstreckt sich die Hauptachse des ersten Bereiches entlang einer Fahrzeugquerrichtung und die Nebenachse des ersten Bereiches erstreckt sich entlang einer Fahrzeughochrichtung. Somit kann entlang der Fahrzeugquerrichtung eine besonders breite Schallkeule bereitgestellt werden, während hingegen entlang einer Fahrzeughochrichtung die Schallkeule verschmälert wird. Somit kann verhindert werden, dass das von dem Ultraschallsensor ausgesendete Ultraschallsignal im Wesentlichen in Richtung einer Fahrbahn des Kraftfahrzeugs ausgesendet und dort reflektiert wird, und damit das reflektierte Ultraschallsignal eine hohe Anzahl von Bodenechos aufweist.

In einer Ausgestaltung der Erfindung ist die Membran einteilig ausgebildet. Dabei sind also der Membranboden und die Membranmantelwand einteilig ausgebildet, wobei vorzugsweise sowohl der Membranboden als auch die Membranmantelwand aus der Magnesiumlegierung ausgebildet sind. Die einteilig ausgebildete Membran wird dabei insbesondere in einem Fertigungsgang beziehungsweise Fertigungsschritt hergestellt. Die Membran kann beispielsweise durch Umformung, insbesondere Fließpressen, eines aus der Magnesiumlegierung ausgebildeten Rohlings oder durch Fräsen der Membran aus einem aus der Magnesiumlegierung ausgebildeten Rohling hergestellt werden. Ein solcher Rohling kann beispielsweise ein Magnesiumblech sein. Durch das einteilige Ausbilden der Membran kann die Membran besonders einfach und schnell gefertigt werden.

Alternativ dazu ist die Membran zweiteilig ausgebildet, wobei der Membranboden und die Membranmantelwand separat zueinander ausgebildet sind. Die Membranmantelwand und der Membranboden, welche insbesondere in separaten Fertigungsgängen hergestellt werden, können dabei, beispielsweise durch Ankleben der Membranmantelwand an der Rückseite des Membranbodens, stoffschlüssig miteinander verbunden werden. Die Membran wird hier also in mehreren Fertigungsgängen hergestellt. Daraus ergibt sich der Vorteil, dass nur der zur Schwingungsanregung und Schwingungserfassung verwendete Membranboden aus der leichten Magnesiumlegierung ausgebildet werden kann, während die Membranmantelwand aus einem anderen Material, durch welches eine Schwingung der Membranmantelwand reduziert werden kann, ausgebildet werden kann.

Vorzugsweise ist dabei die separat zu dem Membranboden ausgebildete Membranmantelwand zumindest bereichsweise aus einem zu der Magnesiumlegierung unterschiedlichen Material ausgebildet. Insbesondere ist der Membranboden aus der Magnesiumlegierung ausgebildet und die Membranmantelwand aus dem zu der Magnesiumlegierung unterschiedlichen Material ausgebildet. Das zu der Magnesiumlegierung unterschiedliche Material weist dabei insbesondere eine höhere Dichte und/oder ein höheres Elastizitätsmodul auf. Insbesondere umfasst das von der Magnesiumlegierung unterschiedliche Material der Membranmantelwand Zink und/oder Stahl und/oder Keramik und/oder Aluminiumoxid. Durch dieses unterschiedliche Material kann das Gewicht beziehungsweise die Masse der Membranmantelwand im Vergleich zu einer aus der Magnesiumlegierung ausgebildeten Membranmantelwand erhöht werden. Dadurch können in vorteilhafter Weise unerwünschte Schwingung der Membranmantelwand während des Aussendens und/oder Empfangens der Ultraschallsignale über den Membranboden reduziert werden.

Auch kann vorgesehen sein, dass an einer Innenseite der Membranmantelwand zumindest bereichsweise ein eine Schwingung der Membranmantelwand reduzierendes und separat zu der Membranmantelwand ausgebildetes Element angeordnet ist. Durch dieses schwingungsreduzierende Element, welches beispielsweise stoffschlüssig mit der Innenseite der Membranmantelwand verbunden ist und dadurch an der Innenseite befestigt ist, kann eine Steifigkeit und/oder eine Masse der Membranmantelwand erhöht werden und damit die Schwingung der Membranmantelwand reduziert werden. Das schwingungsreduzierende Element ist dabei vorzugsweise aus Zink und/oder Stahl und/oder Keramik und/oder Aluminiumoxid ausgebildet. Insbesondere weist die Ausführungsform des Ultraschallsensors mit einer einteiligen, topfförmigen Membran, bei welcher die gesamte Membran aus der Magnesiumlegierung ausgebildet ist, das schwingungsreduzierende Element auf. Beispielsweise kann das schwingungsreduzierende Element an die Innenseite der Membranmantelwand angeklebt sein. Bei einem Ultraschallsensor mit einer zweiteiligen Membran, bei welcher die Membranmantelwand bereits aus dem zu der Magnesiumlegierung unterschiedlichen Material, insbesondere Zink und/oder Stahl und/oder Keramik und/oder Aluminiumoxid ausgebildet ist, kann auf das schwingungsreduzierende Element verzichtet werden.

Vorzugsweise ist das die Schwingung der Membranmantelwand reduzierende Element ringförmig ausgebildet. Das die schwingungsreduzierende Element wird dabei um die Längsachse verlaufend und in radialer Richtung zwischen der Längsachse und der Innenseite der Membranmantelwand anliegend an der Innenseite der Membranmantelwand angeordnet. Das schwingungsreduzierende Element kann beispielsweise entlang der Längsachse eine Höhe aufweisen, welche in etwa der Hälfte einer Gesamthöhe der Membranmantelwand entspricht. Das ringförmige Element kann dabei besonders einfach und in nur einem Arbeitschritt ausgebildet werden, beispielsweise durch Ausfräsen oder Ausstanzen.

Dabei weist das ringförmige Element insbesondere entlang der Längsachse einen konstanten Außenradius auf. Dies bedeutet, dass ein sich in radialer Richtung erstreckender Abstand zwischen der Längsachse und einer Außenseite des ringförmigen Elementes entlang der Längsachse konstant ist. Ein Innenradius des ringförmigen Elementes, also ein sich in radialer Richtung erstreckender Abstand zwischen der Längsachse und einer Innenseite des ringförmigen Elementes, kann entlang der Längsachse zumindest bereichsweise veränderlich ausgebildet sein. Insbesondere vergrößert sich der Innenradius zumindest bereichesweise in Senderichtung, sodass die Innenseite des ringförmigen Elementes zumindest bereichsweise konusförmig ausgebildet ist.

Dabei ist insbesondere die Innenseite der Membranmantelwand in einem an eine Rückseite des Membranbodens angrenzenden ersten Bereich von einer Kreisform abweichend und eckenfrei, insbesondere ellipsenförmig, um die Längsachse verlaufend ausgebildet und in einem entlang der Längsachse zu der Rückseite beabstandeten und an den ersten Bereich angrenzenden zweiten Bereich kreisförmig um die Längsachse verlaufend ausgebildet, wobei das ringförmige Element in dem zweiten Bereich angeordnet ist. Dies bedeutet, dass in dem ersten Bereich der Membranmantelwand, welcher sich ausgehend von der Rückseite des Membranbodens entgegen der Senderichtung bis zu einer vorbestimmten Höhe erstreckt, die Wandstärke der Membranmantelwand in Umlaufrichtung variierend ausgebildet ist. Dadurch ergibt sich der ovalförmige erste Bereich des Membranbodens zur Einstellung der Richtcharakteristik beziehungsweise Schallkeule des Ultraschallsensors. Angrenzend an diesen ersten Bereich ist der zweite Bereich ausgebildet, welcher sich von der vorbestimmten Höhe bis zu einem die Gesamthöhe der Membranmantelwand begrenzenden, oberen Rand der Membranmantelwand erstreckt. In dem zweiten Bereich der Innenseite der Membranmantelwand ist die Wandstärke der Membranmantelwand konstant ausgebildet. Dies bedeutet, dass die Membranmantelwand in dem zweiten Bereich hohlzylinderförmig ausgebildet ist. In diesem zweiten Bereich mit dem kreisförmigen Verlauf der Innenseite der Membranmantelwand ist das ringförmige Element angeordnet, sodass das ringförmige Element vollflächig anliegend an die Innenseite der Membranmantelwand angebracht werden kann. Somit kann das ringförmige Element besonders gut und stabil mit der Innenseite der Membranmantelwand verbunden werden kann.

Bei einer einteilig ausgebildeten Membran, bei welcher die Innenseite der Membranmantelwand entlang der Längsachse über eine gesamte Höhe der Membranmantelwand in Umlaufrichtung ellipsenförmig ausgebildet ist, kann der zweite Bereich ausgebildet werden, indem in dem zweiten Bereich die Innenseite der Membran teilweise abgetragen wird. Die Abtragung kann beispielsweise durch Bohren durchgeführt werden, sodass nach dem Bohren die Innenseite in dem zweiten Bereich in Umlaufrichtung kreisförmig verläuft.

In einer vorteilhaften Ausführungsform der Erfindung weist der Ultraschallsensor ein eine Schwingungsdämpfung des Membranbodens auf einen vorbestimmten Dämpfungswert einstellendes Element auf. Das die Schwingungsdämpfung einstellende Element ist dabei insbesondere ein Dämpfungsschaum, welcher an einer Rückseite des Membranbodens angeordnet ist. Der Dämpfungswert wird dabei so eingestellt, dass sich die Ausschwingzeit einer konventionellen Aluminiummembran ergibt. Die Magnesiummembran wird also weniger gedämpft, wodurch sich ein höherer Schalldruck und damit ein stärkeres Ultraschallsignal ergeben. Somit kann der Wirkungsgrad des Ultraschallsensors erhöht werden und dadurch ein Erfassungsbereich des Ultraschallsensors verbessert werden.

Die Erfindung betrifft außerdem ein Fahrerassistenzsystem für ein Kraftfahrzeug mit zumindest einem Ultraschallsensor. Mittels des zumindest einen Ultraschallsensors können Objekte in dem Umgebungsbereich des Kraftfahrzeugs sowie deren Abstände zu dem Kraftfahrzeug erfasst werden. Die von dem zumindest einen Ultraschallsensor erfassten Daten können einer Steuereinrichtung des Fahrerassistenzsystems bereitgestellt werden, welche basierend auf den Daten eine Assistenzfunktion bereitstellen kann. Das Fahrerassistenzsystem kann beispielsweise als ein Parkhilfeassistent ausgebildet sein.

Ein erfindungsgemäßes Kraftfahrzeug umfasst ein erfindungsgemäßes Fahrerassistenzsystem. Die Ultraschallsensoren sind dabei insbesondere an einem Außenverkleidungsteil, beispielsweise einem Stoßfänger, des Kraftfahrzeugs angeordnet. Die Ultraschallsensoren können beispielsweise in einer durchgängigen Aussparung des Außenverkleidungsteils und damit unverdeckt oder an einer dem Umgebungsbereich des Kraftfahrzeugs abgewandten Rückseite des Außenverkleidungsteils und damit verdeckt angeordnet beziehungsweise verbaut sein.

Die Erfindung betrifft außerdem ein Verfahren zum Herstellen eines Ultraschallsensors für ein Kraftfahrzeug, bei welchem eine topfförmige Membran aufweisend einen Membranboden und eine Membranmantelwand hergestellt wird, wobei der Ultraschallsensor zum Aussenden und/oder Empfangen von Ultraschallsignalen über den Membranboden ausgebildet wird. Darüber hinaus wird zumindest der Membranboden der topfförmigen Membran zumindest bereichsweise aus einer Magnesiumlegierung hergestellt.

Die mit Bezug auf den erfindungsgemäßen Ultraschallsensor vorgestellten bevorzugten Ausführungsformen und deren Vorteile gelten entsprechend für das erfindungsgemäße Fahrerassistenzsystem, für das erfindungsgemäße Kraftfahrzeug sowie für das erfindungsgemäße Verfahren.

Mit Angaben "oben", "unten", "vorne", "hinten", "Rückseite", "Vorderseite", "außen", "innen", "Senderichtung", "Umlaufrichtung" (U), "Längsachse" (L), "radiale Richtung" (R), etc. sind bei bestimmungsgemäßem Gebrauch und bestimmungsgemäßem Anordnen des Ultraschallsensors am Kraftfahrzeug und bei einem dann in Richtung des Kraftfahrzeugs Ultraschallsensors blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs;
- Fig. 2: eine schematische Darstellung einer Seitenschnittansicht einer Ausführungsform einer Membran für einen erfindungsgemäßen Ultraschallsensor;
- Fig. 3a, Fig. 3b: verschiedene Perspektivdarstellungen einer Ausführungsform einer Membran für einen erfindungsgemäßen Ultraschallsensor;
- Fig. 4a, Fig. 4b: verschiedene Perspektivdarstellungen einer weiteren Ausführungsform einer Membran für einen erfindungsgemäßen Ultraschallsensor;
- Fig. 5a, Fig. 5b: verschiedene Perspektivdarstellungen einer weiteren Ausführungsform einer Membran für einen erfindungsgemäßen Ultraschallsensor;
- Fig. 6: Kennlinie für eine Ausschwingzeit einer Membran eines Ultraschallsensors gemäß dem Stand der Technik; und
- Fig. 7: eine Kennlinie für eine Ausschwingzeit einer Ausführungsform einer Membran für einen erfindungsgemäßen Ultraschallsensor.

In den Figuren sind gleiche sowie funktionsgleiche Elemente mit den gleichen Bezugszeichen versehen.

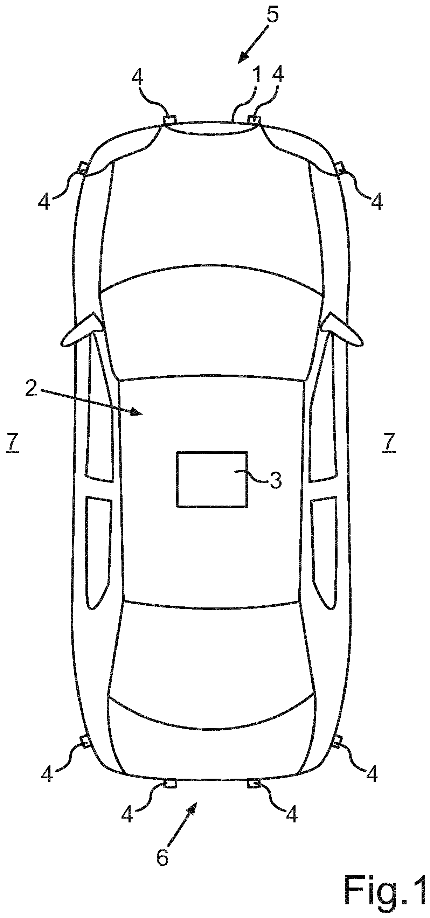

Fig. 1 zeigt ein Kraftfahrzeug 1 gemäß einer Ausführungsform der vorliegenden Erfindung in einer Draufsicht. Das Kraftfahrzeug 1 ist im vorliegenden Fall als ein Personenkraftwagen ausgebildet. Das Kraftfahrzeug 1 weist ein Fahrerassistenzsystem 2 auf, welches wiederum eine Steuereinrichtung 3, die beispielsweise durch ein elektronisches Steuergerät des Kraftfahrzeugs 1 ausgebildet sein kann, umfasst. Darüber hinaus umfasst das Fahrerassistenzsystem 2 zumindest einen Ultraschallsensor 4.

Hier umfasst das Fahrerassistenzsystem 2 acht Ultraschallsensoren 4, von welchen vier Ultraschallsensoren 4 in einem Frontbereich 5 des Kraftfahrzeugs 1 angeordnet sind und vier weitere Ultraschallsensoren 4 in einem Heckbereich 6 des Kraftfahrzeugs 1 angeordnet sind. Die Ultraschallsensoren 4 sind dazu ausgebildet, Objekte in einem Umgebungsbereich 7 des Kraftfahrzeugs 1 zu erfassen. Des Weiteren können die Ultraschallsensoren 4 einen Abstand zwischen den Objekten in dem Umgebungsbereich 7 und dem Kraftfahrzeug 1 bestimmen. Dazu können die Ultraschallsensoren 4 ein Ultraschallsignal aussenden und das an den Objekten reflektierte Ultraschallsignal wieder empfangen.

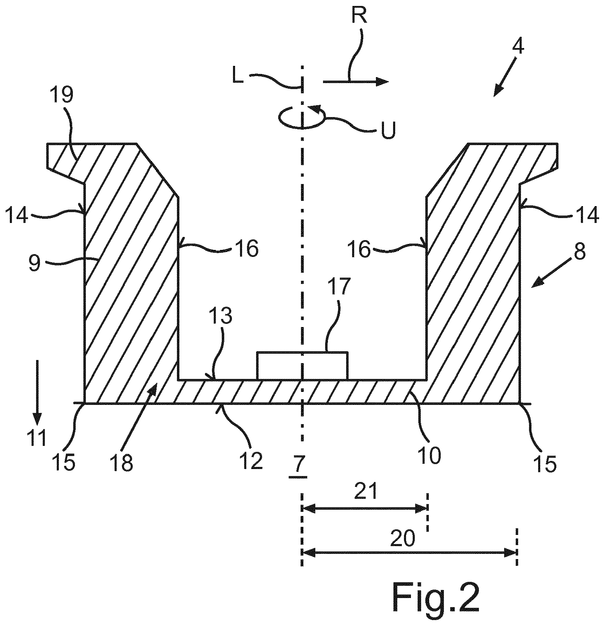

In Fig. 2 ist eine Seitenschnittansicht einer topfförmigen Membran 8 des Ultraschallsensors 4 gezeigt. Die topfförmige Membran 8 weist eine Membranmantelwand 9 sowie einen Membranboden 10 auf, wobei der Ultraschallsensor 4 zum Aussenden und/oder Empfangen der Ultraschallsignale über den Membranboden 10 ausgebildet ist. Die Membranmantelwand 9 verläuft entlang einer, um eine Längsachse L des Ultraschallsensors 4 umlaufenden Umlaufrichtung U und erstreckt sich parallel zu der Längsachse L und damit senkrecht zu dem Membranboden 10. Die Längsachse L ist dabei entlang einer Senderichtung 11 des Ultraschallsensors 4 orientiert. Der Membranboden 10 weist eine in die Senderichtung 11 weisende Vorderseite 12 und eine der Vorderseite 12 gegenüberliegende Rückseite 13 auf. Der Membranboden 10 und die Membranmantelwand 9 sind hier einteilig ausgebildet. Das heißt, dass die Membranmantelwand 9 und der Membranboden 10 insbesondere in einem Fertigungsgang, beispielsweise durch Fließpressen oder Ausfräsen, hergestellt wurden. Dabei erstreckt sich eine Außenseite 14 der Membranmantelwand 9 ausgehend von einem Außenrand 15 des Membranbodens 10 entgegen der Senderichtung 11 parallel zu der Längsachse L. Ein Abstand zwischen der Längsachse L und der Außenseite 14 der Membranmantelwand 9 in radialer Richtung R, also ein Außenradius 20 der Membranmantelwand 9, entspricht also einem Radius des Membranbodens 10. Ein Abstand zwischen der Längsachse L und einer der Außenseite 14 gegenüberliegenden Innenseite 16 der Membranmantelwand 9, also ein Innenradius 21 der Membranmantelwand 9, ist kleiner als der Radius der Membranbodens 9. Die Membranmantelwand 9 weist hier außerdem einen Membrankragen 19 auf, welcher sich in radialer Richtung R senkrecht zur Längsachse L nach außen erstreckt. Mittels des Membrankragens 19 kann die Membran 8 beispielsweise in einem Gehäuse des Ultraschallsensors 4 justiert, zentriert und in einer vorbestimmten Position gehalten werden.

In einer bestimmungsgemäßen Einbaulage des Ultraschallsensors 4 am Kraftfahrzeug 1 ist die Vorderseite 12 des Membranbodens 10 dem Umgebungsbereich 7 des Kraftfahrzeugs 1 zugewandt und kann, beispielsweise bei einem unverdeckten Verbau des Ultraschallsensors 4 am Kraftfahrzeug 1, angrenzend an den Umgebungsbereich 7 ausgebildet sein. Bei einem verdeckten Verbau des Ultraschallsensors 4 am Kraftfahrzeug1 kann die Vorderseite 12 angrenzend an eine dem Umgebungsbereich 7 abgewandte Rückseite eines Außenverkleidungsteils des Kraftfahrzeugs 1 angeordnet werden. Der Ultraschallsensor 4 ist dazu ausgebildet, das Ultraschallsignal über den Membranboden 10 in die Senderichtung 11 in den Umgebungsbereich 7 auszusenden und das in dem Umgebungsbereich 7 reflektierte Ultraschallsignal über den Membranboden 10 entgegen der Senderichtung 11 wieder zu empfangen. Zum Aussenden des Ultraschallsignals wird der Membranboden 10 der Membran 8 des Ultraschallsensors 4 zum Schwingen angeregt. Dazu ist ein Wandlerelement 17, beispielsweise in Form eines Piezoelements, auf der Rückseite 13 des Membranbodens 10 angeordnet. Das Wandlerelement 17 kann beispielsweise an die Rückseite 13 angeklebt sein.

Da der Membranboden 10 des Ultraschallsensors 4 sowohl zum Aussenden als auch zum Empfangen der Ultraschallsignale ausgebildet ist, muss sichergestellt werden, dass der Membranboden 10 nach seiner Anregung durch das Wandlerelement 17 zum Aussenden der Ultraschallsignale möglichst schnell wieder ausgeschwungen ist, sodass dieser das in dem Umgebungsbereich 7 reflektierte Ultraschallsignal wieder aufnehmen beziehungsweise empfangen kann. Konventionelle, aus dem Stand der Technik bekannte Ultraschallsensoren, deren Membranen aus einer Aluminiumlegierung hergestellt sind, weisen eine besonders hohe Ausschwingdauer auf, sodass diese konventionellen Ultraschallsensoren Objekte in einem Nahbereich des Kraftfahrzeug 1, in welchem die Zeit zwischen dem Aussenden und Empfangen des Ultraschallsignals besonders gering ist, üblicherweise nicht zuverlässig detektieren können. Daher ist es vorgesehen, dass zumindest der Membranboden 10 der Membran 8 zumindest bereichsweise aus einer Magnesiumlegierung 18 ausgebildet ist. Durch die Magnesiumlegierung 18 kann die Ausschwingdauer beziehungsweise Ausschwingzeit des Membranbodens 10 verringert werden, sodass der Membranboden 10 in vorteilhafter Weise auch zur Erfassung von Objekten im Nahbereich des Kraftfahrzeugs 1 verwendet werden kann. Objekte befinden sich beispielsweise dann in dem Nahbereich, wenn sie höchstens einen Abstand von 5 m zum Kraftfahrzeug 1, insbesondere höchstens 2 m zum Kraftfahrzeug 1, aufweisen.

Insbesondere ist dabei der Membranboden 10 vollständig aus der Magnesiumlegierung 18 ausgebildet. Bei der hier einteilig ausgebildeten Membran 8 ist zusätzlich die Membranmantelwand 9 zumindest bereichsweise aus der Magnesiumlegierung 18 ausgebildet. Somit ist insbesondere die gesamte Membran 8 aus der Magnesiumlegierung 18 ausgebildet.

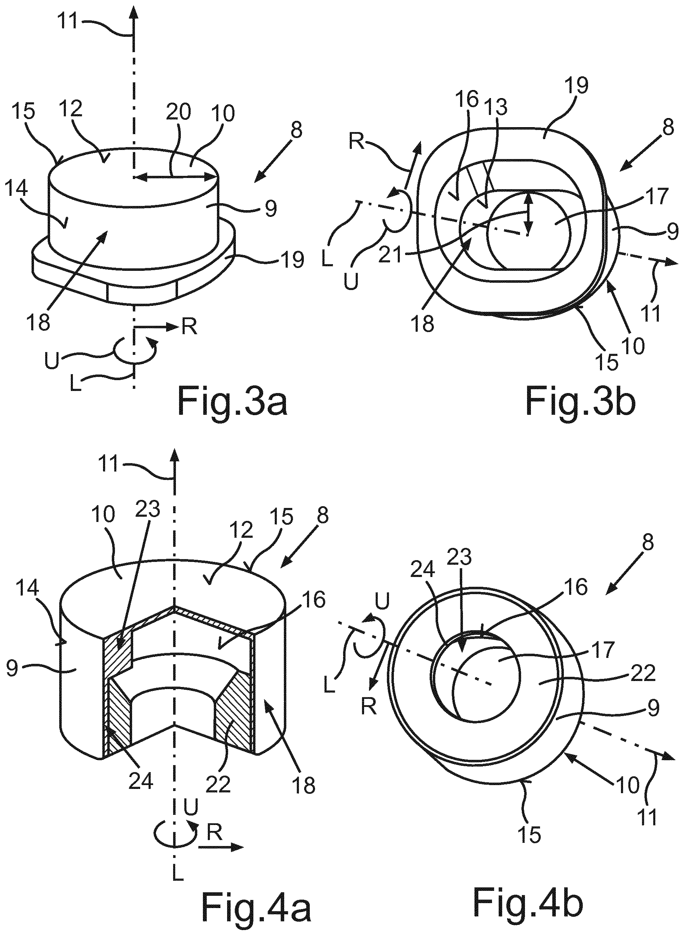

In Fig. 3a und Fig. 3b ist eine Ausführungsform einer einteiligen Membran 8 in zwei verschiedenen Perspektiven gezeigt. Fig. 3a zeigt die Membran 8 von außen betrachtet, Fig. 3b zeigt einen Blick auf die Rückseite 13 des Membranbodens 10. Der Membranboden 10 ist hier entlang der Umlaufrichtung U kreisförmig ausgebildet ist. Die Außenseite 14 der Membranmantelwand 9 weist in Umlaufrichtung U einen konstanten Außenradius 20 auf. Die Außenseite 14 der Membranmantelwand 9 verläuft also kreisförmig um die Längsachse L. Der Innenradius 21 ist, wie in Fig. 3b gezeigt, in Umlaufrichtung U veränderlich, sodass die Innenseite 16 der Membranmantelwand 9 in Umlaufrichtung U ovalförmig verläuft. Der nicht von der Membranmantelwand 9 bedeckte Bereich der Rückseite 13 des Membranbodens 10 ist somit ovalförmig ausgebildet. In diesem nicht von der Membranmantelwand 9 bedeckten Bereich der Rückseite 13 des Membranbodens 10 ist das Wandlerelement 17 angeordnet, welches den Membranboden 10 zum Schwingen anregt. Durch den ovalen Bereich kann eine Richtcharakteristik des Ultraschallsensors 4 eingestellt beziehungsweise vorgegeben werden.

Die Fig. 4a und 4b zeigen eine weitere Ausführungsform einer einteiligen Membran 8 in zwei verschiedenen Perspektiven. Die Membran 8 weist hier an einer Innenseite 16 der Membranmantelwand 9 ein eine Schwingung der Membranmantelwand 9 reduzierendes Element 22 auf. Das schwingungsreduzierende Element 22 ist dabei insbesondere aus einem von der Magnesiumlegierung 18 unterschiedlichen Material, wie beispielsweise Zink und/oder Aluminiumoxid und/oder Stahl und/oder Keramik, ausgebildet und erhöht eine Masse und/oder Steifigkeit der aus der Magnesiumlegierung 18 ausgebildeten Membranmantelwand 9. Durch die erhöhte Masse und/oder erhöhte Steifigkeit der Membranmantelwand 9 kann eine Schwingung der Membranmantelwand 9 beim Aussenden und/oder Empfangen der Ultraschallsignale über den Membranboden 10 reduziert werden.

Die Innenseite 16 der Membranmantelwand 9 kann dabei einen ersten Bereich 23 aufweisen, welcher angrenzend an die Rückseite 13 des Membranbodens 10 ausgebildet ist und sich entgegen der Senderichtung 11 bis zu einer vorbestimmten Höhe erstreckt. In diesem ersten Bereich 23 verläuft die Innenseite 16 der Membranmantelwand 9 entlang der Umlaufrichtung U ellipsenförmig, sodass sich der ellipsenförmige beziehungsweise ovalförmige Bereich auf der Rückseite 13 des Membranbodens 10 ergibt. Eine Wandstärke, also ein entlang der radialen Richtung R orientierter Abstand zwischen der Innenseite 16 und der Außenseite 14 der Membranmantelwand 9, verändert sich in dem ersten Bereich 23 also in Umlaufrichtung U. In einem an den ersten Bereich 23 angrenzender zweiten Bereich 24 der Innenseite 16 der Membranmantelwand 9 verläuft die Innenseite 16 der Membranmantelwand 9 in der Umlaufrichtung U kreisförmig, sodass eine Außenseite des ringförmig ausgebildeten schwingungsreduzierenden Elementes 22 vollflächig anliegend an der Innenseite 16 der Membranmantelwand 9 in dem zweiten Bereich 24 angeordnet werden kann. In dem zweiten Bereich 24 verändert sich also die Wandstärke nicht in Umlaufrichtung U. In dem zweiten Bereich 24 ist die Membranmantelwand 9 als hohlzylinderförmig ausgebildet. Eine Innenseite des schwingungsreduzierenden Elementes 22 ist hier in Senderichtung 11 bereichsweise konisch ausgebildet. Ein Abstand zwischen der Innenseite des schwingungsreduzierenden Elementes 22 und der Längsachse L vergrößert sich also in Senderichtung 11. Das schwingungsreduzierende Element 22 und die Membranmantelwand 9 sind insbesondere bündig abschließend angeordnet.

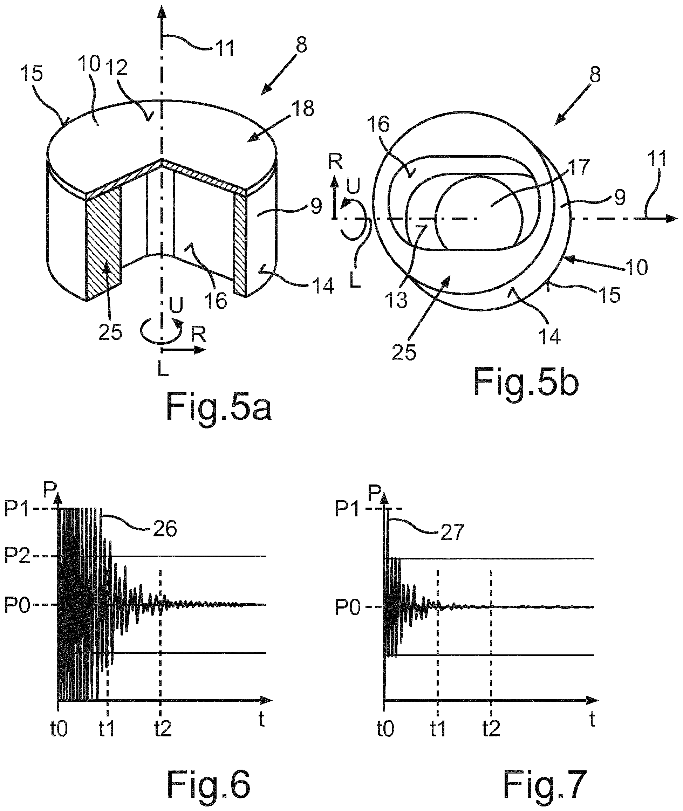

Die Fig. 5a und 5b zeigen perspektivische Darstellungen einer weiteren Ausführungsform einer Membran 8. Die Membran 8 ist hier zweiteilig ausgebildet. Dies bedeutet, dass der Membranboden 10 und die Membranmantelwand 9 als separate Teile ausgebildet sind, welche insbesondere in separaten Fertigungsgängen hergestellt wurden. Dabei ist hier nur der Membranboden 10 aus der Magnesiumlegierung 18 ausgebildet. Die Membranmantelwand 9 ist aus einem zu der Magnesiumlegierung 18 unterschiedlichen Material 25 ausgebildet. Das Material 25 kann beispielsweise Zink, Keramik, Aluminiumoxid und/oder Stahl umfassen. Durch das Material 25 kann die Membranmantelwand 9 mit einer im Vergleich zu einer aus der Magnesiumlegierung 18 ausgebildeten Membranmantelwand 9 erhöhten Masse hergestellt werden. So können Schwingungen der Membranmantelwand 9 verhindert beziehungsweise unterdrückt werden, während der aus der Magnesiumlegierung 18 ausgebildete Membranboden 10 gleichzeitig eine besonders geringe Ausschwingdauer aufweist. In der teilweise geschnittenen Ansicht der Membran 8 gemäß Fig. 5a ist gezeigt, dass die Membranmantelwand 9 unterschiedliche Wandstärken, also Abstände zwischen der Außenseite 14 und der Innenseite 16, aufweist, da die Außenseite 14 in Umlaufrichtung U kreislinienförmig verläuft und die Innenseite 16 in Umlaufrichtung U ellipsenförmig verläuft.

In Fig. 6 ist anhand einer Kennlinie 26 eine Ausschwingdauer einer Aluminiummembran eines Ultraschallsensors gemäß dem Stand der Technik gezeigt. In Fig. 7 ist anhand einer Kennlinie 27 eine Ausschwingdauer der Magnesiummembran 10 einer Ausführungsform eines erfindungsgemäßen Ultraschallsensors 4 gezeigt. Dabei sind Schwingungsamplituden P der Membranen über die Zeit t aufgetragen.

Zu einem Zeitpunkt t0 wird der Membranboden der Membranen zu Schwingen angeregt, sodass die Schwingungsamplituden P der Membranen, also Auslenkungen der Membranen entlang der Senderichtung 11, einen maximalen Wert P1 aufweisen. Bei der Kennlinie 26 ist gezeigt, dass bei einem Zeitpunkt t1 die Schwingungsamplitude P lediglich auf einen Wert P2 reduziert ist. Die Membran des Ultraschallsensors gemäß dem Stand der Technik ist also zu dem Zeitpunkt t1 noch nicht ausgeschwungen. Erst zu einem Zeitpunkt t2 ist die Schwingungsamplitude P auf einen Wert P0 reduziert, bei welchem die Membran als ausgeschwungen gilt. Der Wert P0 entspricht in etwa einer Auslenkung von 0 m. Bei der Kennlinie 27 ist gezeigt, dass der Wert P0 bereits zu dem Zeitpunkt t1 erreicht ist, die Magnesiummembran also bereits zu dem Zeitpunkt t1 ausgeschwungen ist. Die Ausschwingdauer der Magnesiummembran 10 ist also deutlich kürzer als die Ausschwingdauer der Aluminiummembran.

## Patentansprüche

1. Ultraschallsensor (4) für ein Kraftfahrzeug (1) mit einer topfförmigen Membran (8) aufweisend einen Membranboden (10) und eine Membranmantelwand (9), wobei der Ultraschallsensor (4) zum Aussenden und/oder Empfangen von Ultraschallsignalen über den Membranboden (9) ausgebildet ist,
**dadurch gekennzeichnet, dass**
zumindest der Membranboden (9) der topfförmige Membran (8) zumindest bereichsweise aus einer Magnesiumlegierung (18) ausgebildet ist.

2. Ultraschallsensor (4) nach Anspruch 1,
**dadurch gekennzeichnet, dass**
zusätzlich die Membranmantelwand (9) zumindest bereichsweise aus der Magnesiumlegierung (18) gebildet ist.

3. Ultraschallsensor (4) nach Anspruch 1 oder 2,
**dadurch gekennzeichnet, dass**
der Membranboden (10) kreisförmig ausgebildet ist, eine Außenseite (14) der Membranmantelwand (9) kreisförmig um eine senkrecht zu dem Membranboden (10) orientierte Längsachse (L) verlaufend ausgebildet ist und eine Innenseite (16) der Membranmantelwand (9) zumindest in einem an eine Rückseite (13) des Membranbodens (10) angrenzenden Bereich von einer Kreisform abweichend und eckenfrei um die Längsachse (L) verlaufend ausgebildet ist.

4. Ultraschallsensor (4) nach einem der vorhergehenden Ansprüche,
**dadurch gekennzeichnet, dass**
die Membran (8) einteilig ausgebildet ist.

5. Ultraschallsensor (4) nach einem der Ansprüche 1 bis 3,
**dadurch gekennzeichnet, dass**
die Membran (8) zweiteilig ausgebildet ist, wobei der Membranboden (10) und die Membranmantelwand (9) separat zueinander ausgebildet sind.

6. Ultraschallsensor (4) nach Anspruch 5,
**dadurch gekennzeichnet, dass**
die zu dem Membranboden (10) separate Membranmantelwand (9) zumindest bereichsweise aus einem zu der Magnesiumlegierung (18) unterschiedlichen Material (25) ausgebildet ist.

7. Ultraschallsensor (4) nach Anspruch 6,
**dadurch gekennzeichnet, dass**
das von der Magnesiumlegierung (18) unterschiedliche Material (25) der Membranmantelwand (9) Zink und/oder Stahl und/oder Keramik und/oder Aluminiumoxid umfasst.

8. Ultraschallsensor (4) nach einem der vorhergehenden Ansprüche,
**dadurch gekennzeichnet, dass**
an einer Innenseite (16) der Membranmantelwand (9) zumindest bereichsweise ein eine Schwingung der Membranmantelwand (9) reduzierendes und zu der Membranmantelwand (9) separates Element (22) angeordnet ist.

9. Ultraschallsensor (4) nach Anspruch 8,
**dadurch gekennzeichnet, dass**
das die Schwingung der Membranmantelwand (9) reduzierende Element (22) ringförmig ausgebildet ist.

10. Ultraschallsensor (4) nach Anspruch 9,
**dadurch gekennzeichnet, dass**
die Innenseite (16) der Membranmantelwand (9) in einem an eine Rückseite (13) des Membranbodens (10) angrenzenden ersten Bereich (23) von einer Kreisform abweichend und eckenfrei um die Längsachse (L) verlaufend ausgebildet ist und in einem entlang der Längsachse (L) zu der Rückseite (13) des Membranbodens (10) beabstandeten und an den ersten Bereich (23) angrenzenden zweiten Bereich (24) kreisförmig um die Längsachse (L) verlaufend ausgebildet ist, wobei das ringförmige Element (22) an der Innenseite (16) der Membranmantelwand (9) in dem zweiten Bereich (24) angeordnet ist.

11. Ultraschallsensor (4) nach einem der Ansprüche 8 bis 10,
**dadurch gekennzeichnet, dass**
das die Schwingung der Membranmantelwand (9) reduzierende Element (22) aus Zink und/oder Stahl und/oder einer Keramik und/oder ein Aluminiumoxid ausgebildet ist.

12. Ultraschallsensor (4) nach einem der vorhergehenden Ansprüche,
**dadurch gekennzeichnet, dass**
der Ultraschallsensor (4) ein eine Schwingungsdämpfung des Membranbodens (10) auf einen vorbestimmten Dämpfungswert einstellendes Element aufweist.

13. Fahrerassistenzsystem (2) mit zumindest einem Ultraschallsensor (4) nach einem
der vorhergehenden Ansprüche.

14. Kraftfahrzeug (1) mit einem Fahrerassistenzsystem (2) nach Anspruch 13.

15. Verfahren zum Herstellen eines Ultraschallsensors (4) für ein Kraftfahrzeug (1), bei welchem eine topfförmige Membran (8) aufweisend einen Membranboden (10) und eine Membranmantelwand (9) hergestellt wird, wobei Ultraschallsensor (4) zum Aussenden und/oder Empfangen von Ultraschallsignalen über den Membranboden (10) ausgebildet wird,
**dadurch gekennzeichnet, dass**
zumindest der Membranboden (10) der topfförmige Membran (8) zumindest bereichsweise aus einer Magnesiumlegierung (18) hergestellt wird.
